# EUROPEAN PATENT APPLICATION

(11) **EP 1 607 875 A2**
(43) Date of publication of application: **21.12.2005**
(21) Application number: 05076925.6
(22) Date of filing: 23.10.1998
(51) Int. Cl.: G06F 13/00

(54) **System and method for interaction between a desktop computer and multiple mobile devices**

(30) Priority: 24.10.1997 US 63164 P; 07.11.1997 US 64986 P; 10.04.1998 US 58528 P
(62) Divisional of application: 98953953.1
(71) Applicant: MICROSOFT CORPORATION, Redmond, Washington 98052-6399 (US)
(72) Inventor: Flanagin, Steve, Redmond, Washington 98053 (US); Hu, George, Redmond, Washington 98052 (US); Ved, Haresh G, Bellvue, Washington 98006 (US)
(74) Representative: Palmer, Jonathan R.

(57) **Abstract**

A system and method of interaction between a computer (4), such as a desktop computer, and a plurality of mobile devices (3A, 3B) include storing a first identifier (91A, 15A) on a first mobile device (3A) and the computer (4), and storing a second identifier (91B, 15B) on a second mobile device (3B) and the computer (4), wherein the second identifier (91B) is different than the first identifier (91A). A set of settings (13A, 13B) are stored in the computer (4) referenced to each stored identifier (15A, 15B) for each respective mobile device (3A, 3B). Upon connection of one of the mobile devices (3A, 3B) to the computer (4), the identifier (91A, 91B) stored in the connected mobile device (3A, 3B) is compared with the identifier (15A, 15B) stored on the computer (4). Interaction between the connected mobile device (3A, 3B) and the computer (4) is controlled as a function of the stored respective set of settings (13A), 13B) if corresponding identifiers (15A, 15B) are found.

## Description

### BACKGROUND OF THE INVENTION

The present invention relates to personal mobile computing devices commonly known as handheld portable computers. More particularly, the present invention relates to a system and a method for allowing interaction between a desktop computer and multiple mobile devices.

Mobile devices are small electronic computing devices often referred to as personal desktop assistants. One such mobile device is the Handheld PC (or "H/PC") based on and including the Windows CE brand operating system sold by Microsoft Corporation of Redmond, Washington. Although small, a wide variety of computing tasks and applications can be performed by such mobile devices, such as word processing, spread sheet programs, personal money managers and games, to name a few. In many respects, these programs are very similar to programs that reside on an individual's desktop computer. In some applications, the mobile device may not have as many functions as available on a desktop computer but, nevertheless, are quite valuable as a means for updating and changing data in the field where even a laptop computer may not be available or used conveniently.

It is also common for a mobile device to be used in conjunction with a desktop computer. For example, the user of a mobile device may also have access to, and use, a desktop computer at work or at home. The user may typically run the same types of applications on both the desktop computer and on the mobile device. Thus, it is quite advantageous for the mobile device to be designed to be coupled to the desktop computer to exchange information with, and share information with, the mobile device. In many applications, the user must decide which desktop computer the mobile device will be coupled to or be configured to work with. Having assigned or configured the desktop computer to work with the selected mobile device, the desktop computer cannot be conveniently used with another mobile device. This limitation is particularly disadvantageous when, for example, it is desired that many users interact with a common database stored on the desktop computer. For instance, a sales force may individually return to a home office and interact with a designated desktop computer having a common database that is shared by all in the sales force. Each individual sales person could update each of their respective mobile devices so as to have the most current information in the database, or to update the common database with information obtained in the field. Prior art systems are not convenient to use since each user must reconfigure communication and data transfer parameters each time the user connects the mobile device to the desktop computer. In many situations, each of the users must be using the same type of mobile device.

There is a continuing need to improve the interaction between a single desktop computer and a plurality of mobile devices. In particular, there is a need to allow a plurality of mobile devices to interact with the desktop computer without requiring an inordinate amount of configuration by the user as well as allow the user to choose to use a particular mobile device independent of other users interacting with the desktop computer.

### SUMMARY OF THE INVENTION

The present invention fulfills these needs by providing a system and a method of interaction between a computer, such as a desktop computer, and a plurality of mobile devices including storing a first identifier on a first mobile device and the computer, and storing a second identifier on a second mobile and the computer, wherein the second identifier is different than the first identifier. A set of settings are stored in the computer referenced to each stored identifier for each respective mobile device. Upon connection of one of the mobile devices to the computer, the identifier stored in the connected mobile device is compared with the identifier stored on the computer. Interaction between the connected mobile device and the computer is controlled as a function of the stored respective set of settings if corresponding identifiers are found.

### BRIEF DESCRIPTION OF THE DRAWINGS

FIG. 1 is a block diagram illustrating an operating environment of the present invention.
FIG. 2 is a block diagram of one embodiment of a conventional desktop computer used in conjunction with a mobile device.
FIG. 3 is a simplified pictorial illustrating one embodiment of the mobile device in accordance with the present invention.
FIG. 4 is one embodiment of a simplified block diagram of the mobile device shown in FIG. 3.
FIG. 5 is state or flow diagram illustrating operation of a profile manager module.

### DETAILED DESCRIPTION OF THE PREFERRED EMBODIMENTS

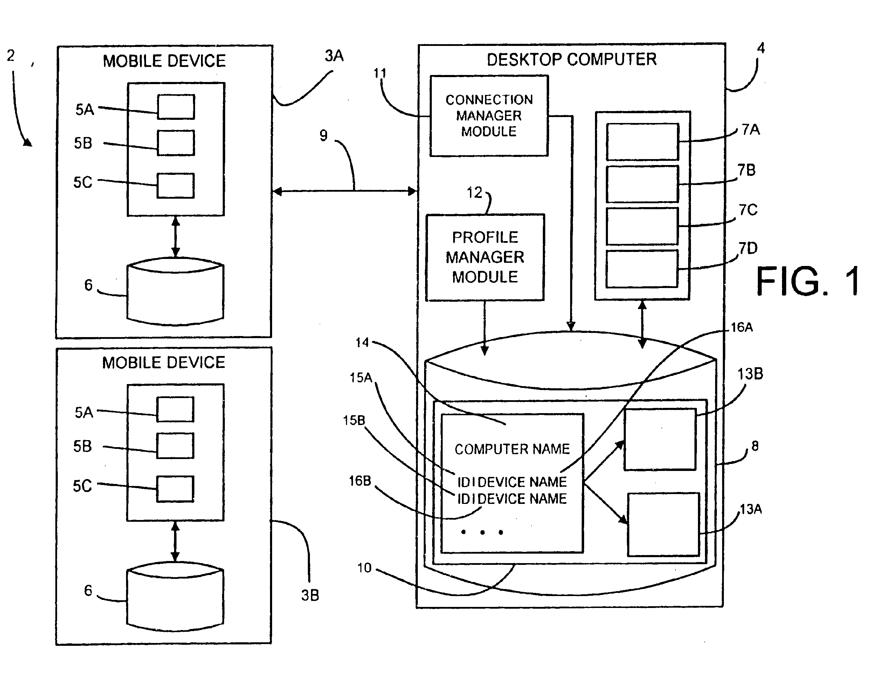

FIG. 1 is a block diagram of a typical system or environment 2 in which the present invention operates. The environment 2 includes a first mobile device 3A and second mobile device 3B. Each of the mobile devices 3A and 3B includes one or more application programs indicated at 5A, 5B and 5C, and a store 6 used to store objects, data files and/or databases used by the application programs 5A-5C. A computer, herein illustrated as a desktop computer 4, also includes one or more application programs indicated at 7A, 7B, 7C and 7D, and a store 8 used to store objects, data files and/or databases used by the application programs 7A-7D. In some circumstances, it is desired that at least some of the objects on stores 6 and 8 be either copied or transferred in order that the user can access the same information regardless as to whether the mobile device or the desktop computer 4 is being used. Although illustrated wherein each mobile device 3A and 3B includes the same application programs 5A-5C, it should be understood that each mobile device 3A and 3B can be individually configured as desired by each respective user to contain one or a number of application programs, some of which can correspond to application programs 7A-7D residing on the desktop computer 4. It should also be understood that the mobile devices 3A and 3B need not be made from the same manufacturer, nor even identical to operate in the present environment 2. In other words, the mobile devices 3A and 3B can be manufactured by different vendors using different CPU platforms and having different operating characteristics. However, each of the mobile devices 3A and 3B are connectable to the desktop computer 4 using one of a plurality of known connection mechanisms 9, such as a serial connection, an infrared link or a modem connection. Further connection mechanisms 9 are described in U.S. patent application, Serial No. 09/058,685 filed on April 10, 1998, entitled "SYSTEM AND METHOD FOR INTERACTION BETWEEN A DESKTOP COMPUTER AND MULTIPLE MOBILE DEVICES", which has been assigned to the same assignee as the present application and is hereby fully incorporated by reference. In the embodiment illustrated, the mobile device 3A is connected to the desktop computer 4 using the connection mechanism 9. Alternatively, when it is desired, the mobile device 3B can be connected to the desktop computer 4 using the connection mechanism 9. Although illustrated wherein two mobile devices 3A and 3B can be connected to the desktop computer 4, if desired, additional mobile devices manufactured by the same or different vendors of mobile devices can also be connected to the desktop computer 4.

Generally, the desktop computer 4 also includes partnership information indicated at 10 that is stored in store 8. The partnership information 10 comprises settings or parameters to contrcl aspects of the connection and data transfer process when each mobile device 3A and 3B is connected. Upon initial connection of a new type of mobile device 3A or 3B to the desktop 4, default settings, previously stored on the desktop computer 4, are obtained based on the type of mobile device connected. If desired, at least some to almost all of the default settings can be changed by the mobile device user.

In one embodiment, the partnership information 10 corresponding to each mobile device 3A and 3B is stored on the desktop computer 4 and is accessed each time the user connects the mobile devices 3A and 3B thereto. Thus, each user need not have to reestablish his or her user preferences each time the mobile device 3A or 3B is connected. In a preferred embodiment, the partnership information 10 includes any unique settings for each unique type of mobile device being connected to the desktop computer 4. In this manner, the mobile devices 3A and 3B need not be the same type. The partnership information 10 can be stored remote from the desktop computer 4. If desired, some of the partnership information 10, for example, some or all of the user settings, can be stored on each of the respective mobile devices 3A and 3B, which would then be accessible by the desktop computer 4. Likewise, the partnership information 10 can also be stored, for example, on a network server that is accessible to the desktop computer 4. Typically, the partnership information 10 on the desktop computer 4 includes a record of the partnership with the mobile device and a module to access any relevant user setting pertaining to the partnership no matter where they are stored.

The partnership information 10 is preferably organized under unique identifiers stored at 15A and 15B assigned, for example, during initial formation of each partnership. The unique identifiers are stored on the desktop computer 4 and stored separately on each of the mobile devices 3A and 3B. In addition to the unique identifiers stored at 15A and 15B, device names can also be stored at 16A and 16B in the partnership information 10 along with the name of the computer 4 stored at 14. The partnership information 10 includes configuration settings for services used by the user to transfer or copy data between the connected mobile device 3A or 3B and the desktop computer 4 as well as data necessary to perform a service. As used herein, a "service" is a single or group of functions made available to the mobile device that connects to the desktop computer 4 with the service installed. For example, a "Synchronization Service" is a service that specializes in the transfer of data between the connected mobile device 3A and the desktop computer 4, including replications, automatic file copy and/or update. Other services include a file conversion service that converts files between the connected mobile device 3A or 3B and the desktop computer 4 (for example, when the user specifies that one or a plurality of files be separately copied) so that data files can be accessed by each respective application program residing thereon. Another service includes synchronizing time and date clocks of the connected mobile device 3A and the desktop computer 4.

A profile manager module 12 residing on the desktop computer 4 detects connection of the mobile device 3A or 3B to the desktop computer 4 and stores and/or accesses the partnership information 10 in the store 8 to allow each user convenient access to the desktop computer 4 and the partnership information 10 stored thereon. As will be explained, the partnership information 10 is stored as individual profile areas 13A and 13B corresponding to each of the respective mobile devices 3A and 3B. In one embodiment, the profile areas 13A and 13B comprise registry subkeys and individual profile folders for storing partnership specific information.

Before describing aspects of the present invention, a brief description of the desktop computer 4 and a typical mobile device, such as mobile device 3A, will be helpful.

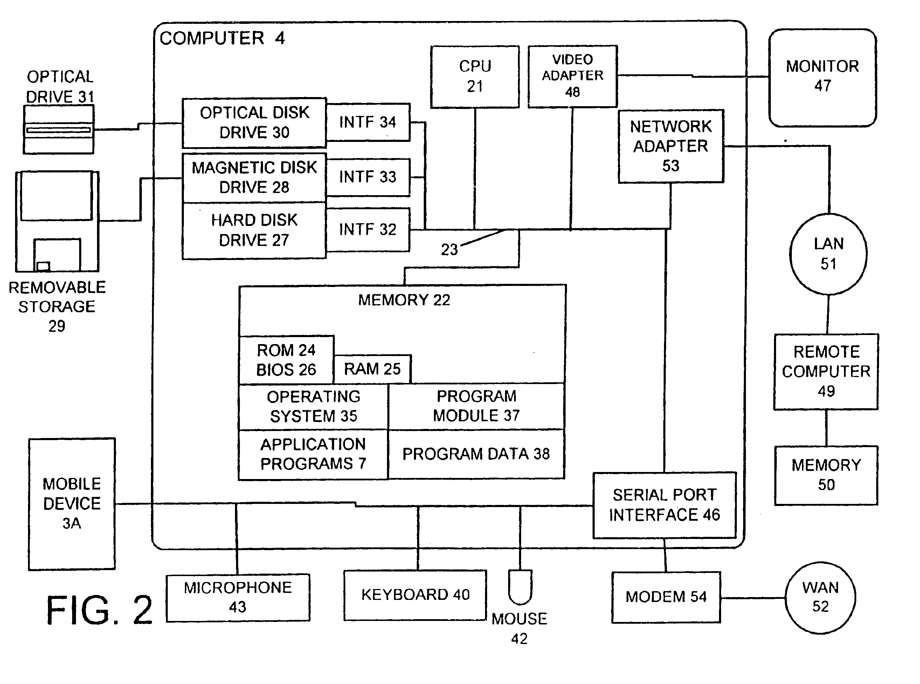

FIGS. 2, 3 and 4 and the related discussion are intended to provide a brief, general description of a suitable computing environment in which the invention may be implemented. Although not required, the invention will be described, at least in part, in the general context of computer-executable instructions, such as program modules, being executed by the desktop computer 4 or the mobile devices 3A and 3B. Generally, program modules include routine programs, objects, components, data structures, etc., that perform particular tasks or implement particular abstract data types. Moreover, those skilled in the art will appreciate that the invention may be practiced with other computer system configurations, including other handheld devices, such as palmtop computers, multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to FIG. 2, an exemplary system for implementing the invention includes a general purpose computing device in the form of a conventional personal or desktop computer 4, including a computer processing unit (CPU) 21, a system memory 22, and a system bus 23 that couples various system components including the system memory 22 to the processing unit 21. The system bus 23 may be any of several types of bus structures including a memory bus or memory controller, a peripheral bus, and a local bus using any of a variety of bus architectures. The system memory 22 includes read only memory (ROM) 24 and random access memory (RAM) 25. A basic input/output system (BIOS) 26, containing the basic routine that helps to transfer information between elements within the desktop computer 4, such as during start-up, is stored in ROM 24. The desktop computer 4 further includes a hard disk drive 27 for reading from and writing to a hard disk (not shown), a magnetic disk drive 28 for reading from or writing to a removable magnetic disk 29, and an optical disk drive 30 for reading from or writing to a removable optical disk 31, such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and the associated computer-readable media provide non-volatile storage of computer readable instructions, data structures, program modules and other data for the desktop computer 4.

Although the exemplary environment described herein employs the hard disk, the removable magnetic disk 29 and the removable optical disk 31, it should be appreciated by those skilled in the art that other types of computer readable media which can store data that is accessible by a computer, such as magnetic cassettes, flash memory cards, digital video disks, Bernoulli cartridges, random access memories (RAMs), read only memory (ROM), and the like, may also be used in the exemplary operating environment.

A number of program modules may be stored on the hard disk, magnetic disk 29, optical disk 31, ROM 24 or RAM 25, including an operating system 35, one or more of the application programs 7A-7D, other program modules 37, and program data 38. A user may enter commands and information into the desktop computer 4 through input devices such as a keyboard 40, a pointing device 42 and a microphone 43. Other input devices (not shown) may include a joystick, game pad, satellite dish, scanner, or the like. These and other input devices are often connected to the processing unit 21 through a serial port interface 46 that is coupled to the system bus 23, but may be connected by other interfaces, such as a sound card, a parallel port, a game port or a universal serial bus (USB). A monitor 47 or other type of display device is also connected to the system bus 23 via an interface, such as a video adapter 48. In addition to the monitor 47, personal computers may typically include other peripheral output devices, such as a speaker and printers (not shown).

The desktop computer 4 may operate in a wired or wireless networked environment using logic connections to one or more remote computers, such as a remote computer 49. The remote computer 49 may be another personal computer, a server, a router, a network PC, a peer device or other network node, and typically includes many or all of the elements described above relative to the desktop computer 4, although only a memory storage device 50 has been illustrated in FIG. 2. The logic connections depicted in FIG. 2 include a local area network (LAN) 51 and a wide area network (WAN) 52. Such networking environments are commonplace in offices, enterprise-wide computer network Intranets and the Internet.

When used in a LAN networking environment, the desktop computer 4 is connected to the local area network 51 through a network interface or adapter 53. When used in a WAN networking environment, the desktop computer 4 typically includes a modem 54 or other means for establishing communications over the wide area network 52, such as the Internet. The modem 54, which may be internal or external, is connected to the system bus 23 via the serial port interface 46. In a network environment, program modules depicted relative to the desktop computer 4, or portions thereof, may be stored in the remote memory storage devices, not shown. It will be appreciated that the network connections shown are exemplary and other means of establishing a communications link between the computers may be used. In the embodiment illustrated, the mobile device 3A also connects to the desktop computer 4 through the serial port interface 46.

The desktop computer 4 runs an operating system that is stored in any of the memory storage devices illustrated in FIG. 2 and executes on the processing unit 21. One suitable operating system is a Windows brand operating system sold by Microsoft Corporation, such as Windows 95 or Windows NT, or other derivative versions of Windows brand operating systems, or another suitable operating system. Other suitable operating systems include systems such as Macintosh OS sold by Apple Corporation, and the OS/2 Presentation Manager sold by International Business Machines (IBM).

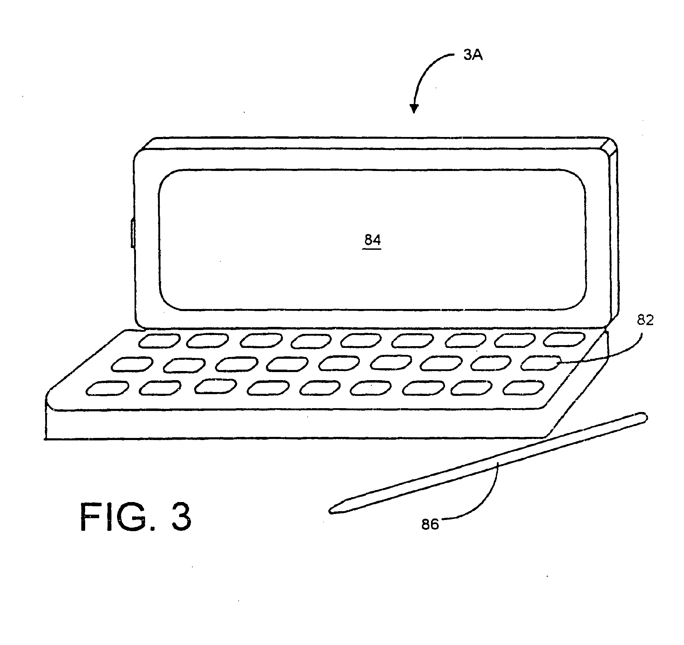

FIG. 3 is a pictorial illustration of one preferred embodiment of the mobile device 3A which can be used in accordance with the present invention. The mobile device 3A, in one embodiment, is a desktop assistant sold under the designation H/PC. The mobile device 3A has some components which are similar to those of the desktop computer 4. For instance, in one embodiment, the mobile device 3A includes a miniaturized keyboard 82, a display 84 and a stylus 86. The display 84 can be a LCD display having a contact-sensitive screen used in conjunction with the stylus 86. The stylus 86 is used to press or contact the display 84 at designated coordinates to accomplish certain user input functions. Of course, other configurations could be used as well. For example, user input mechanisms could be included such as a keypad, a track ball, and various types of miniaturized keyboards, or the like. In addition, the mobile device 3A may not be embodied as the H/PC brand of desktop assistant, but could also be implemented as another type of personal digital assistant (PDA), another personal organizer, a palmtop computer, a similar computerized notepad device, a phone or a pager.

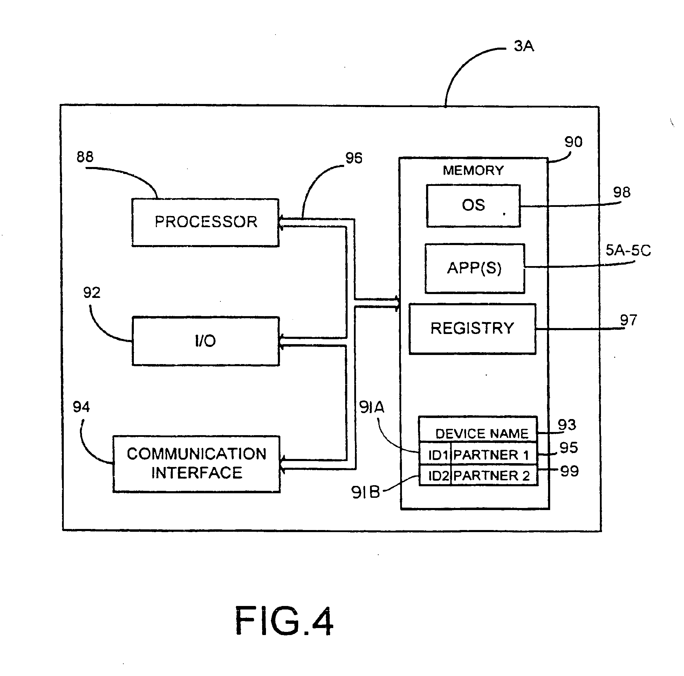

FIG. 4 is a more detailed block diagram of the mobile device 3A. The mobile device 3A preferably includes a microprocessor 88, memory 90, input/output (I/O) components 92 (which include the keyboard 82, and the touch sensitive display 84 and a serial interface 94). In one embodiment, these components are coupled for communication with one another over a suitable bus 96. The memory 90 can be implemented as non-volatile electronic memory such as a random access memory (RAM) with a battery back-up module (not shown) such that information stored in the memory 90 is not lost when the general power to mobile device 3A is shut down. A portion of memory 90 is preferably allocated as addressable memory for program execution, while the remaining portion of memory 90 is preferably used to simulate storage on a disk drive where memory 90, of course, can function as the store 6 in FIG. 1.

Memory 90 includes an operating system 98 and the application programs 5A-5C. The operating system 98, during operation, is preferably executed by the microprocessor 88. The operating system 98, in one embodiment, is the Windows CE brand operating system commercially available from Microsoft Corporation. The operating system 98 is preferably designed for mobile devices. The objects in the store 6 are preferably maintained by the application programs 5A-5C and the operating system 98, at least partially in response to calls to the exposed application program interfaces and methods. The application programs 5A-5C are not necessarily designed to be entirely compatible with corresponding application programs 7A-7D which execute on the desktop computer 4. For instance, there may not be precise one-to-one matching between the properties of specific object types.

In addition to the application programs 5A-5C and the operating system 98, memory 90 further stores a registry 97 used in operating systems such as Windows CE brand operating systems. The use of registries such as the registry 97 is conventional and provides information relating to the application programs 5A-5C installed on the mobile devices 3A and 3B. In a preferred embodiment, the registry 97 stores user settings of the application as well as where particular files are to be stored in tree-type directories, which is a common technique used in many operating systems. For particular use in the present invention, the memory 90 further stores identifiers at 91A and 91B. The identifiers are unique for each partnership formed between the mobile device 3A and 3B and partnered computers, such as the desktop computer 4. By making the identifiers stored at 91A and 91B unique for each partnership formed, the mobile device 3A or 3B can have many partnerships with the desktop computer 4 for different uses. In one embodiment, the identifier stored at 91A corresponds to one of the profile areas 13A or 13B in the desktop computer 4, while the identifier stored at 91B corresponds to a profile area in another desktop computer. In a further embodiment, the mobile device 3A also stores a "Device Name" at 93 given by the user, as well as names at 95 and 99 of one or more desktop computers 4 that the mobile device 3A has been partnered with. If desired, this information can be stored in a part of the registry 97 or stored separately from the registry 97. In one embodiment, the desktop computer 4 stores similar information, including the name of the desktop computer 4, and for each partnership, the identifiers at 15A and 15B and the respective names at 16A and 16B of each partnered mobile device 3A or 3B.

In order to provide easy and convenient interaction between the desktop computer 4 and a connected mobile device, for example, mobile device 3A illustrated in FIG. 1, it is preferable that the mobile device type or class first be registered with the desktop computer 4 so that upon connection of the mobile device 3A with the desktop computer 4, the desktop computer 4 can recognize the exact type or class of mobile device being connected and already have available appropriate parameter settings to interact with it. In one embodiment, registration includes copying a default profile information 100 such as a group of registry settings and/or default files into store 8 (FIG. 1) containing all necessary parameters to allow the desktop computer 4 to interact with the mobile device 3A. The default profile information 100 is then used when creating a user specific profile area, such as profile area 13A, or interacting with the desktop computer 4 as a guest, as discussed below. In one embodiment, a manufacturer of the mobile device 3A to be registered on the desktop computer 4 provides information each time it is connected to the desktop computer 4. This information can be obtained using suitable API calls known and used commonly in the art between devices. The information provided by the mobile device when connected to the desktop computer 4 is compared to other stored information during the registration process in order to detect the type of mobile device 3A being connected. Although in one embodiment, registration occurs during execution of a "setup program" provided by the manufacturer and executed on the desktop computer 4 to copy files from any of the removable mediums such as a CD disk, if desired, all registration information could be stored on the mobile device 3A and downloaded to the desktop computer 4 upon initial connection.

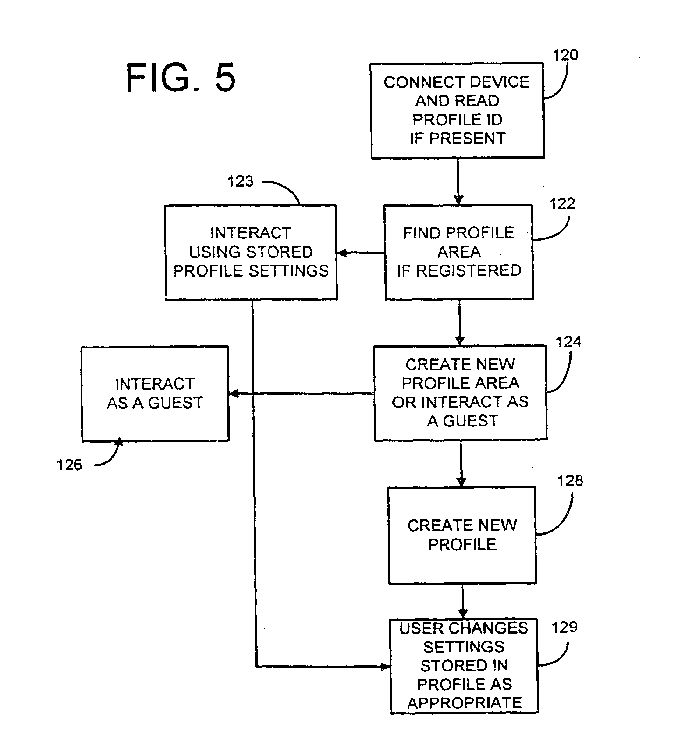

FIG. 5 is a state or flow diagram illustrating various operating states and actions performed by the profile manager module 12. At state 120, the mobile device 3A is connected (if not already connected from the registration procedure) and the profile identifier 91A is read, if present. Operation then continues to state 122. At stated 122, the profile manager module 12 examines all of the stored profile identifiers in the partnership information 10 to determine if a match exists. In the exemplary embodiment, each profile area 13A and 13B stored in the desktop computer 4 is identified by a unique identifier (profile identifier) that is assigned at profile area creation time by a random number generator. The profile identifier is stored in the profile areas 13A and 13B, preferably along with a unique device name, a description of the mobile device and other device data. The profile identifier is used by the desktop computer 4 to refer to each particular profile area 13A and 13B stored therein. As discussed above, the profile areas 13A and 13B contain data or settings that are needed to provide the desired services to the connected mobile device 3A. The profile areas 13A and 13B stored in the desktop computer 4 correspond to the connected mobile devices 3A and 3B. Preferably, the mobile device 3A has one profile area 13A and 13B with the desktop computer 4. However, since unique profile identifiers are used for each partnership, it would be possible for the mobile device 3A to have multiple partnerships with the same desktop computer 4. A suitable user interface either on the desktop computer 4 or on the mobile device 3A would query the user as to which of the stored profile areas to use. Nevertheless, the data in each profile area 13A and 13B pertains to only that partnership and will not affect any other partnership. If a profile area 13A is found based on the profile identifier stored at 91A, operation of the profile manager module 12 proceeds to state 123, whereat the stored user settings are used and provided to any required service.

If either the connected mobile device 3A or the desktop computer 4 has no profile identifiers in its list, or no match is found, operation of the profile manager module 12 proceeds to state 124. At state 124, the user is queried through a suitable user interface (UI) dialog box provided on the desktop computer 4 as to whether the user would like to log on as a guest or create a new user specific profile area 13A.

If a user decides to interact as a guest, operation of the profile manager module 12 proceeds to state 126. At state 126, the profile manager module 12 uses the information gathered at connection, identifying the type of :nobile device connected, and selects the correct default profile information 100 stored during the registration procedure. In one embodiment, one set of global or common default settings are stored in store 8 to be used by all devices unless otherwise overwritten. Each service has appropriate default settings for that service stored in this area. At the time of connection of the mobile device 3A, the default settings are copied for use as guest profile settings 101, if the user connects as a guest, or copied as new partnership profile settings discussed below, if the user elects to create a new partnership. The system then looks to see if there are default settings that should be changed based on the type of mobile device 3A detected. These default setting changes were stored during the registration of the mobile device 3A with the desktop computer 4.

As a guest, the user could have access to all services available to partnered users, or to only a limited number of services. For example, the user may be limited to browsing the mobile device contents, transfer and/or organizing files on the mobile device 3A, or performing file conversion. In other situations, additional services may be provided such as synchronizing the clock of the mobile device 3A to the clock of the desktop computer 4 or loading application programs from the desktop computer 4 onto the mobile device 3A. Some of the settings may be adjustable and adjusted for the connection session, for example, a certain file conversion format to be used. However, at the end of the connection session when the user disconnects the mobile device 3A from the desktop computer 4, these settings will be lost. In the event the desktop computer 4 does not recognize the type of mobile device, a further limited number of services that are not dependent on the type of mobile device can be made available. In yet a further embodiment, if the mobile device user first connects as a guest, but then later decides to setup a partnership, the desktop computer 4 can query the user in the manner described below and save the guest profile settings 101 in a unique profile area 13A.

If the user will not be interacting with the desktop computer 4 as a guest, the user can create a new profile area which will be stored on the desktop computer 4, and which is represented in FIG. 6 at state 128. The profile manager module 12 sets aside storage in the store 8 for the new profile area. In one preferred embodiment, a subkey is created in the registry of the desktop computer 4 for the mobile device 3A and a folder in file space on the store 8 is created. The profile manager module 12 obtains a copy of the default profile information 100 corresponding to the type of mobile device connected as discussed above and stores it in one or both of these areas as appropriate. For example, default files can be stored in the file area or folder.

The profile manager module 12 assigns the profile identifier which will be stored in the profile area 13A and in the mobile device 3A at 91A. Preferably, the user is then queried to enter a unique device name for the connected mobile device 3A. In one embodiment, the default name of the mobile device 3A is obtained directly from the mobile device 3A and the user is asked whether it should be changed. In the embodiment illustrated, the unique device name is required so that the profile area 13A can be stored on the desktop computer 4 in a manner more easily recognizable to the user than under the profile identifier stored at 15A. As discussed above, the desktop computer 4 can store the profile area 13A under a directory of folder having the unique device name. In this manner, the user can locate the profile area 13 on the desktop computer 4 and access the profile area 13A through a suitable interface module that allows the user to change any of the service settings, or even delete the profile area 13A partnership information, and thus discontinue the partnership. In addition, if the user changes the unique device name stored at 93 on the mobile device 3A, for example, when the mobile device 3A is not connected to the desktop computer 4, upon reconnection to the desktop computer 4, the profile manager module 12 determines that the mobile device 3A does have an associated profile area 13A stored on the desktop computer 4 based on a comparison of the profile identifiers. However, the profile manager module 12 will also detect that the unique device name stored at 93 of the mobile device 3A has been changed. If the new unique device name stored at 93 for the mobile device 3A is not already present on any of the other profile areas 13A and 13B stored on the desktop computer 4, the profile manager module 12 will make appropriate corrections to the directory name in which the profile area is stored.

In the preferred embodiment, a step in forming a partnership between the mobile device 3A and the desktop computer 4 involves retaining the desktop computer 4 name at 95 or 99 in the mobile device 3A. In one embodiment, the mobile device 3A is allowed to "partner" with up to two different desktop computers 4. Each of the names stored 95 and 99 of the desktop computers that the mobile device 3A is partnered with is retained in the mobile device 3A along with the unique profile identifiers 91A and 91B as described above.

In a preferred embodiment, the mobile device 3A is limited in the number of desktop computers that it can be partnered with. For example, the mobile device 3A can be limited to form only two partnerships with the desktop computers. If the user attempts to form a partnership with a desktop computer in excess of those allowed, the user is prompted as to which previous desktop computer partner should be deleted prior to forming a profile area on the new desktop computer and, thus, forming a partnership therewith. If the user chooses not to form a new partnership with a new desktop computer, or has formed all allowable partnerships, the user can create the guest profile area 101 with the desktop computer and interact as a guest.

After the profile area 13A has been successfully created and stored on the desktop computer 4 and a partnership has been formed, the profile manager module 12 can access various settings and present the settings to the user to capture user preferences for mobile device services. In one embodiment, the service provider provides all user interfaces necessary to change the settings, where the user interfaces are stored on the desktop computer 4 and accessible to the profile manager module 12. In this manner, the profile manager module 12 can accommodate new services easily. In one embodiment, the profile manager module 12 assists the user in specifying information that the service needs in order to provide the service to the mobile device. Generally, the user will be provided an opportunity to change commonly adjusted settings for common services. Appropriate default values will be provided for all service settings. Preferably, appropriate defaults for each setting are provided such that the user will not need to adjust settings, except in special situations. Examples follow for settings that do not have obvious defaults. For example, if the synchronization service is used in order to synchronize a calendar application provided on the desktop computer 4 with a calendar application provided on the mobile device 3A, the synchronization service needs to know which calendar applications and data files are being used. Likewise, a preference can be set in the user settings to resolve conflicts between similar objects stored in the mobile device 3A and the desktop computer 4. For example, the user can modify the user setting in the profile area 13A indicating that if any conflicts were to arise, the synchronization service should resolve the conflict automatically and use the value or objects stored on the desktop computer 4. Likewise, if the user prefers, the user can modify this setting and resolve the conflict in favor of the value or the object stored in the mobile device 3A. In yet a further example, the user can modify this setting so that the user is prompted during synchronization to resolve the conflict manually.

Another user setting can be modified in the profile areas 13A and 13B to indicate that upon connection of the mobile device 3A to the desktop computer 4, the time and/or date residing on the mobile device 3A will be synchronized with that of the desktop computer 4.

Other user settings in the profile area 13A can be used to indicate automatic file conversions when the user either synchronizes data or transfer files between the mobile device 3A and the desktop computer 4. Typically, default settings are provided by the manufacturer upon registration of the mobile device 3A with the desktop computer 4 which are then subsequently copied when a new profile area 13A and 13B is created. Default settings can also be supplied by new services available on the desktop computer 4. The default settings will thus allow application programs residing on the mobile device 3A to synchronize with similar application programs found on the desktop computer 4, but stored in a different format. Many times, the user will not need to change these default settings. However, in some circumstances, it may be necessary for the user to select automatic file conversion when the application programs residing on the mobile device 3A differ from the application programs residing on the desktop computer 4. For instance, the user may have a first type of word processor residing on the mobile device 3A and a second type of word processor residing on the desktop computer 4. In order to obviate the need for either one of the word processors to read a document stored in the other format, by modifying the user settings in the profile area 13A, the user can specify that file conversion take place automatically upon file transfer.

Another service available to the user is a "backup/restore" service. This service allows the user to backup data contents stored in the mobile device 3A to the desktop computer 4 and, in the event of data loss, restore any or all of the backed up files. In view that many mobile devices can be partnered with the desktop computer 4, it is preferable to store the backup files in a manner such that they are not overwritten. In the present invention, the profile folders have the unique device name of each mobile device 3A and 3B and are used to store all file-based information that is specific to the mobile device 3A and 3B, including backup files. Special care may have to be taken when the user elects to restore to a mobile device. The restore operation also restores the partnership information 10 to the mobile device (the profile identifiers stored at 91A and 91B and the partnered computer names stored at 95 and 99). If mobile devices are allowed to restore the profile identifier intact, several identical mobile devices can be created having the same profile ID. This would allow several mobile devices to connect to the desktop computer 4 and use the same profile area 13A. This could easily result in confusion to the user, if not data loss. To prevent this, one or more of the profile identifiers stored on the mobile device 3A are invalidated when they are restored. A new profile identifier will be stored at 91A on the mobile device 3A at restore time for the current desktop computer 4 partnership. The desktop computer 4 will then immediately delete the old profile identifier and insert the new profile identifier where necessary.

Although the present invention has been described with reference to preferred embodiments, workers skilled in the art will recognize that changes may be made in form and detail without departing from the scope of the invention.

Embodiments of the invention provide a method of interaction between a computer and a plurality of mobile devices, the method comprising, storing a first identifier on a first mobile device and the computer, storing a second identifier on a second mobile device and the computer, the second identifier being different than the first identifier, storing a set of settings in the computer referenced to each stored identifier for each respective mobile device, comparing each respective identifier stored on the mobile devices with each respective identifier stored on the computer upon connection of one of the mobile devices to the computer, controlling interaction between the connected mobile device and the computer as a function of the stored respective set of settings if corresponding identifiers are found.

Preferably the first mobile device and the second mobile device are not substantially similar.

Preferably the step of storing a set of settings includes obtaining a set of default settings.

Preferably, the method further comprises detecting the type of mobile device when connected to the computer, and changing at least one of the default settings as a function of the type of device detected.

Preferably, the method further comprises storing a unique device name for each of the mobile devices in the computer referenced to each respective identifier.

Preferably, the method further comprises accessing each set of stored settings on the computer as a function of the device name of the mobile device.

Preferably, the method further comprises obtaining the device name from the mobile device when connected to the computer and checking the device name with the device name stored on the computer.

Preferably, the method further comprises changing the device name on the computer to match the device name of the mobile device if corresponding identifiers are found.

Preferably, the method further comprises storing a set of guest settings, and wherein the step of controlling interaction between the connected mobile device and the computer as a function of the stored set of guest settings if corresponding identifiers are not found.

Preferably, the step of storing a set of guest settings includes obtaining a set of default settings.

Preferably, the method further comprises detecting the type of mobile device when connected to the computer, and changing at least one of the default settings as a function of the type of device detected.

Preferably, the method further comprises storing a name of the computer on each mobile device in association with each identifier.

Embodiments of the invention also provide an interactive computer system comprising a first mobile device having a first identifier stored thereon, a second mobile device having a second identifier stored thereon, the second identifier being different than the first identifier, and a computer selectively couplable to each of the mobile devices, the computer having a first set of settings referenced to the first identifier and a second set of settings referenced to the second identifier, the computer comparing each respective identifier stored on the mobile devices with each respective identifier stored on the computer upon connection of one of the mobile devices to the computer, and controlling interaction between the connected mobile device and the computer as a function of the stored respective set of settings if corresponding identifiers are found.

Preferably, the first mobile device and the second mobile device are not substantially similar.

Preferably, the computer stores a device name for each of the mobile devices referenced to each respective identifier.

Preferably, the computer includes a module for accessing each set of stored settings on the computer as a function of the device name of the mobile device.

Embodiments of the invention still further provide a method of interaction between a mobile device and a plurality of computers, the method comprising storing a first identifier on the mobile device and a first computer, storing a second identifier on the mobile device and a second computer, the second identifier being different than the first identifier, storing a first set of settings in the first computer referenced to the first identifier, storing a second set of settings in the second computer referenced to the second identifier, comparing each identifier stored on one of the computers with each identifier stored on the mobile device upon connection of said one of the computers to the mobile device, and controlling interaction between the connected computer and the mobile device as a function of the stored respective set of set settings if corresponding identifiers are found.

Preferably, the method further comprises storing a computer name for each of the first and second computers referenced to each respective identifier.

Preferably, the steps of storing a first set of setting and storing a second set of settings each includes obtaining a set of default settings.

Preferably, the method further comprises detecting the type of mobile device when connected to said one computer, and changing at least one of the default settings as a function of the type of device detected.

Embodiments of the invention still further provide an interactive computer system comprising a first computer having a first set of settings referenced to a first identifier, a second computer having a second set of settings referenced to a second identifier, the second identifier being different than the first identifier, a mobile device couplable to each of the computers, the mobile device having the first identifier and the second identifier stored thereon, and wherein upon connection of the mobile device with one of the computers, said one of the computers compares each identifier with the identifier stored thereon and controls interaction between the mobile device and said one of the computers as a function of the stored respective set of settings if corresponding identifiers are found.

## Claims

1. A method of interaction between a computer and a plurality of mobile devices, the method comprising:
creating a first set of settings controlling interaction of a first type of mobile device with the computer;
creating a second set of settings controlling interaction of a second type of mobile device with the computer;
storing the first and second set of settings on the computer;
detecting the type of the mobile device when the mobile device is connected to the computer; and
accessing the first and second set of settings to control interaction of the computer with the mobile device as a function of the type detected.

2. The method of claim 1 and further comprising:
assigning an identifier to identify a connected mobile device when connected to the computer;
storing the identifier in the connected mobile device and the computer; and
storing a third set of settings based on one of the first and second set of settings corresponding to the type of the connected mobile device, the third set of settings being referenced to the identifier.

3. The method of claim 2 wherein the step of storing the third set of settings includes storing a copy of one of the first and second set of settings.

4. The method of claim 3 and further comprising changing at least one setting of the third set of settings.

5. A method of interaction between a computer and a mobile device, the computer storing backup data for the mobile device referenced to a first identifier, the method comprising:
connecting the mobile device to the computer;
restoring the backup data to the mobile device from the computer;
obtaining a second identifier different than the first identifier;
storing the second identifier on the mobile device; and
changing the first identifier on the computer to the second identifier.

6. The method of claim 5, wherein the mobile device includes a third identifier for interaction with a second computer, the method including invalidating the third identifier.
